# EUROPEAN PATENT APPLICATION

(11) **EP 4 664 408 A1**
(43) Date of publication of application: **17.12.2025**
(21) Application number: 25181159.2
(22) Date of filing: 05.06.2025
(51) Int. Cl.: G06T 15/00, G06T 15/06

(54) **METHODS AND SYSTEMS FOR PARSING MULTIDIMENSIONAL DATA**

(30) Priority: 14.06.2024 GB 202408595
(71) Applicant: Imagination Technologies Limited, Kings Langley, Hertfordshire WD4 8LZ (GB)
(72) Inventor: Hoffmann, Alexander, Kings Langley, WD4 8LZ (GB); Barrabes Castillo, Arturo, Kings Langley, WD4 8LZ (GB); Muley, Meghana, Kings Langley, WD4 8LZ (GB); Ramage, Georgina, Kings Langley, WD4 8LZ (GB)
(74) Representative: Slingsby Partners LLP

(57) **Abstract**

There is provided a computer-implemented method of parsing multidimensional data to identify work packets to be processed, wherein the multidimensional data is mapped into one-dimensional data using a Z-ordering function. The method comprises: obtaining dimensions of the multidimensional data and obtaining information identifying a valid region of the multidimensional data, where the valid region identifies work packets. The method comprises determining at least part of a sequence, within the one-dimensional data, corresponding to positions within the multidimensional data lying in the valid region, by: determining, in dependence on the Z-ordering function, whether a position defined by a first value of the one-dimensional data lies within the valid region; and in response to determining that the position defined by the first value does not lie within the valid region: calculating an overflow value which, when added to the first value, causes a least significant bit that is a 1 in a binary representation of the first value to flip to a 0. The method further comprises summing the first value and the overflow value to obtain a trial value and determining whether the trial value lies within the valid region to thereby determine whether the trial value forms part of the sequence, wherein the sequence identifies work packets to be processed.

## Description

### CROSS-REFERENCE TO RELATED APPLICATION

This application claims priority from UK patent application GB2408595.3 filed on 14 May 2024, which is herein incorporated by reference in its entirety.

### TECHNICAL FIELD

The present disclosure relates to handling multidimensional data mapped onto one dimension in a computational environment, more specifically to determining a valid sequence of one-dimensional data mapped from multidimensional data.

### BACKGROUND

In graphics processing systems, particularly those performing rasterisation and ray tracing, scene data for rendering an image of a 2D or 3D scene is stored in memory. Scene data is often represented by tiles representing a 2D area, e.g., a grid. When handling the scene data, the grid is scanned by part of the graphics processing system, and work items corresponding to units of the grid are sent to the relevant part of the graphics processing system for scheduling and/or further processing.

One way of scanning scene data represented using a grid is to scan from left to right across each row, one row at a time, until all rows of the grid have been scanned. This order is called 'strided' order, or 'raster scan' order. However, the amount of scene data stored is often very large, and repeated access to co-located regions (e.g., data within rectangular tiles) of scene data is frequent. Consequently, scanning in strided order may not be the most efficient way to obtain scene data stored in tiled regions. Moreover, scene data must be stored in lines of memory such as a cache. Thus, if rows of scene data are stored in (roughly) corresponding lines of cache memory, accessing rectangular tiles of data may become inefficient using the strided order which scans over rows, and not over rectangular areas. Specifically, scanning in strided order increases the probability of cache misses or page breaks.

Therefore, in graphics processing systems, scene data may be stored in a format that better reflects the spatial position of scene data that is frequently accessed (i.e., in tiles of data). One such order is a Z-order, also called Morton order, which maps the multidimensional scene data into a one-dimensional sequence. The Z-order function and other multi-to-one dimension mapping functions are useful because they increase the spatial locality of reference of the scene data, and thus allow cache lines to represent rectangular areas of scene data. Such ordering therefore decreases the probability of cache misses, which would introduce inefficiency into a process.

The Z-order function thus provides advantages in graphics processing systems over the standard raster scan order. However, the use of the Z-order can also result in other inefficiencies that depend on the size of the grid. A feature of Z-order functions and other multi-to-one dimension mapping functions is that they can be implemented using a single counter value. Thus, the x and y coordinates representing 2D grid positions can be encoded using the binary representation of a single number. The dimensions of the total representable grid area sometimes called the 'launch size' of the grid, are therefore typically powers of two.

Problems therefore arise when the portion of the grid that contains work items or work packets to be processed is not an exact power-of-2. Using Z-ordering functions when the valid region of a grid is not an exact power-of-2 results in generating invalid coordinates in the grid. Potentially, this results in a significant number of wasted cycles that correspond to an invalid grid coordinate being produced. Unlike using the strided order, it is not possible to trivially determine the next valid grid value of a Z-order sequence. Consequently, the use of Z-order can potentially introduce unacceptable inefficiencies in a graphics processing algorithm or system.

The present disclosure aims to solve at least the aforementioned problems associated with using the Z-order to represent multidimensional scene data.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

There is provided a computer-implemented method of parsing multidimensional data to identify work packets to be processed, wherein the multidimensional data is mapped into one-dimensional data using a Z-ordering function, the method comprising:
obtaining dimensions of the multidimensional data;
obtaining information identifying a valid region of the multidimensional data, the valid region identifying work packets;
determining at least part of a sequence, within the one-dimensional data, corresponding to positions within the multidimensional data lying in the valid region, the determining comprising:
   determining, in dependence on the Z-ordering function, whether a position defined by a first value of the one-dimensional data lies within the valid region;
   in response to determining that the position defined by the first value does not lie within the valid region: calculating an overflow value which, when added to the first value, causes a least significant bit that is a 1 in a binary representation of the first value to flip to a 0;
   summing the first value and the overflow value to obtain a trial value;
   determining whether a position defined by the trial value lies within the valid region to thereby determine whether the trial value forms part of the sequence, wherein the sequence identifies work packets to be processed.

In example implementations, the overflow value is the lowest possible value that causes the least significant bit that is a 1 (in the binary representation of the first value) to flip to a 0. The least significant bit of the first value may be a zero. In example implementations, in response to determining whether a position defined by the trial value lies within the valid region, the method thereby determines that the sequence does not include the first value and does not include values between, and not including, the first value and the trial value.

In example implementations, the work packets to be processed are for rendering a scene, and the multidimensional data represents a region of the scene. In example implementations, the overflow value is equal to a power of 2.

In example implementations calculating the overflow value comprises: identifying the least significant bit in a binary representation of the first value that is a 1; and generating the overflow value to have a magnitude equal to the power of 2 value represented by the least significant bit that is a 1. Calculating the overflow value may thus be notionally equivalent to determining a number of contiguous zeros in a binary representation of the first value, wherein the contiguous zeros include a least significant bit of the binary representation. The method may therefore, notionally, by equivalent to or involve obtaining a value equal to 2 raised to the power of an exponent, the exponent equal to number of contiguous zeros.

In example implementations, the valid region is defined by a plurality of boundary values, one boundary value for each respective dimension of the multidimensional data, and wherein determining whether the position defined by the first value of the one-dimensional data lies within the valid region comprises: converting the first value into a multidimensional coordinate using a mapping defined by the Z-ordering function; and determining whether the multidimensional coordinate falls within a range defined by the plurality of boundary values.

In example implementations, each boundary value is a maximum value, and determining whether the multidimensional coordinate falls within the range defined by the plurality of boundary values comprises determining whether at least one coordinate value of the multidimensional coordinate exceeds the maximum value of the corresponding dimension. Boundary values may be maximum values, e.g., a maximum value for each of the X and Y dimensions of 2-dimensional data. Generally, a boundary value may indicate a range, where either the start or end point of the range is known such that the extents of the range and thus the valid region can be determined.

In example implementations, the method further comprises determining, in dependence on the Z-ordering function, that a position defined by the trial value does not lie within the valid region to thereby determine that the trial value does not form part of the sequence, and in response to said determining: identifying a least significant bit in a binary representation of the trial value that is a 1; calculating a further overflow value whose magnitude is at least as great as a value represented by the least significant bit of the trial value that is a 1 and which, when added to the trial value, causes the least significant bit of the trial value that is a 1 to flip to a 0; summing the trial value and the further overflow value to obtain a further trial value; and determining whether a position defined by the further trial value lies within the valid region to thereby determine whether the further trial value forms part of the sequence

In examples, the further overflow values may be at least twice the size of the overflow value. The further overflow value may therefore by larger than the overflow value by a value equal to a power of 2.

In example implementations, calculating the overflow value comprises performing, on the binary representation of the first value, a bit-inversion operation, an addition, and an at least one bitwise comparison operation, to thereby obtain the overflow value. For example, the bitwise comparison is an AND operation.

In example implementations, the first value is the first entry in the one-dimensional data, and wherein the method comprises iterating, in sequential order, over entries of the one-dimensional data to thereby determine the at least part of the sequence corresponding to positions within the multidimensional data lying within the valid region.

In example implementations, the at least part of a sequence is determined without testing a subset of values within the one-dimensional data to determine whether the subset of values define positions lying within the valid region.

In example implementations the subset of values includes at least values located between, and not including, the first value and the trial value of the one-dimensional data. Thus the values of the one-dimensional lying between the first value and the trial value may be skipped over.

In example implementations, none of the values of the one-dimensional data located between, and not including, the first value and the trial value of the one-dimensional data represent positions that lie within the valid region.

In example implementations each dimension of the multidimensional data is equal to a power of two, and wherein at least one dimension of the valid region is not equal to a power of two.

In example implementations the multidimensional data represents a region of a scene, and the method further comprises outputting at least some of the work packets identified by the sequence for processing, wherein the outputted work packets are used for rendering at least part of the scene.

In example implementations the Z-ordering function maps, for each mapped value of the one-dimensional data, alternate bits of a binary representation of the mapped value to a respective coordinate value of the multidimensional data.

In example implementations the Z-ordering function represents a Morton order function and wherein the multidimensional data is 2D.

In example implementations the computer-implemented method is part of a ray tracing system, and wherein the work packets identify ray tracing or shading operations.

In example implementations the computer-implemented method is performed by a graphics processing unit, GPU.

In example implementations, the multidimensional data represents a multidimensional array space for storing thread groups, and wherein the valid region represents an array of thread groups within the multidimensional array space, each thread group comprising identifying a plurality of work packets.

There is also provided a processing unit for parsing multidimensional data to identify work packets to be processed, wherein the multidimensional data is mapped into one-dimensional data using a Z-ordering function, the processing unit configured to:
obtain dimensions of the multidimensional data;
obtain information identifying a valid region of the multidimensional data, the valid region identifying work packets;
determine at least part of a sequence, within the one-dimensional data, corresponding to positions within the multidimensional data lying in the valid region, the processing unit configured to perform the determining by:
   determining, in dependence on the Z-ordering function, whether a position defined by a first value of the one-dimensional data lies within the valid region;
   in response to determining that the position defined by the first value does not lie within the valid region: calculating an overflow value which, when added to the first value, causes a least significant bit that is a 1 in a binary representation of the first value to flip to a 0;
   summing the first value and the overflow value to obtain a trial value; and determining whether a position defined by the trial value lies within the valid region to thereby determine whether the trial value forms part of the sequence, wherein the sequence identifies work packets to be processed.

In example implementations, the processing unit is a graphics processing unit, GPU. The processing unit may be embodied in hardware on an integrated circuit.

In example implementations the processing unit is configured to calculate the overflow value using operations selected from the group of: unary bitwise operations; bitwise comparison operations; and addition operations. The overflow value may advantageously thereby be calculated without using multiplying logic and without using exponential logic within the hardware unit.

There is also provided a graphics processing system configured to perform any of the methods described herein.

There is also provided an integrated circuit definition dataset that, when processed in an integrated circuit manufacturing system, configures the integrated circuit manufacturing system to manufacture a processing unit as described herein.

There is also provided computer readable code configured to cause any of the methods described herein to be performed when the code is run.

There is also provided a non-transitory computer readable storage medium having stored thereon a computer readable description of a processing unit as described herein that, when processed in an integrated circuit manufacturing system, causes the integrated circuit manufacturing system to manufacture an integrated circuit embodying the processing unit.

The processing unit may be embodied in hardware on an integrated circuit. There may be provided a method of manufacturing, at an integrated circuit manufacturing system, a processing unit. There may be provided an integrated circuit definition dataset that, when processed in an integrated circuit manufacturing system, configures the system to manufacture a processing unit. There may be provided a non-transitory computer readable storage medium having stored thereon a computer readable description of a processing unit that, when processed in an integrated circuit manufacturing system, causes the integrated circuit manufacturing system to manufacture an integrated circuit embodying a processing unit.

There may be provided an integrated circuit manufacturing system comprising: a non-transitory computer readable storage medium having stored thereon a computer readable description of the processing unit; a layout processing system configured to process the computer readable description so as to generate a circuit layout description of an integrated circuit embodying the processing unit; and an integrated circuit generation system configured to manufacture the processing unit according to the circuit layout description.

There may be provided computer program code for performing any of the methods described herein. There may be provided non-transitory computer readable storage medium having stored thereon computer readable instructions that, when executed at a computer system, cause the computer system to perform any of the methods described herein.

The above features may be combined as appropriate, as would be apparent to a skilled person, and may be combined with any of the aspects of the examples described herein.

### BRIEF DESCRIPTION OF THE DRAWINGS

Examples will now be described in detail with reference to the accompanying drawings in which:
Figure 1 shows a ray tracing system according to examples described herein;
Figure 2A shows a thread grid scanned using a Z-order;
Figure 2B shows a thread grid scanned using an inverted N-order;
Figure 3 shows an example of a full-sized thread grid being scanned using the Z-order, including the valid region of the thread grid;
Figure 4 is a table showing the binary representations and coordinates for counter values of a Z-order and the corresponding skip values applied according to embodiments of the present disclosure;
Figure 5 shows a grid and a Z-order sequence corresponding to the example of Figure 4, including a visualisation of the overflow values;
Figure 6 shows a 3D embodiment of the Z-order known as a Lebesgue 3D curve;
Figure 7 shows a flowchart illustrating an algorithm for determining an overflow value according to embodiments of the present disclosure;
Figure 8 shows a flowchart illustrating an algorithm for determining an overflow value using bitwise operations according to embodiments of the present disclosure;
Figure 9 shows a computer system in which a graphics processing system is implemented; and
Figure 10 shows an integrated circuit manufacturing system for generating an integrated circuit embodying a graphics processing system.

The accompanying drawings illustrate various examples. The skilled person will appreciate that the illustrated element boundaries (e.g., boxes, groups of boxes, or other shapes) in the drawings represent one example of the boundaries. It may be that in some examples, one element may be designed as multiple elements or that multiple elements may be designed as one element. Common reference numerals are used throughout the figures, where appropriate, to indicate similar features.

### DETAILED DESCRIPTION

The following description is presented by way of example to enable a person skilled in the art to make and use the invention. The present invention is not limited to the embodiments described herein and various modifications to the disclosed embodiments will be apparent to those skilled in the art.

Embodiments will now be described by way of example only.

As mentioned above, the Z-order, also called Morton order, is a good choice for ordering scene data in a graphics processing system because it increases the spatial locality of reference of the scene data, and thus allows cache lines to represent rectangular areas of scene data. The Z-order thus provides advantages in graphics processing systems over the standard raster scan order. The Morton order can be applied to storing scene data, 2D or 3D, for rendering an image for rasterisation and ray tracing purposes. However, the use of Morton order can potentially introduce unacceptable inefficiencies in a processing system because, when the valid region of the set of multidimensional data to be parsed is not an exact power-of-2, a significant number of invalid coordinates can be produced for the multidimensional data. Potentially, this results in a significant number of wasted cycles that correspond to an invalid coordinate of the multidimensional data being produced. Although it would be theoretically possible to mathematically pre-determine the values of a valid sequence for a given grid of multidimensional data and a given 'valid region' of the grid, the mathematical operations needed to determine this would be prohibitively expensive (in terms of chip area) as they would involve multiplying logic. Furthermore, pre-determining, and storing indications of, which regions of a scene grid to 'skip' before runtime for all the different possible grid sizes/dimensions would involve a lot of work and storage, and is thus not generally viable.

The following examples mainly describe a ray tracing method, merely by way of example. However, it should be appreciated that the presently described embodiments are applicable to other types of graphics processing algorithms and systems, e.g., rasterisation techniques, and indeed other types of processes such as image processing or general computational processing that involve mapping multidimensional data into a one-dimensional sequence using Z-ordering functions.

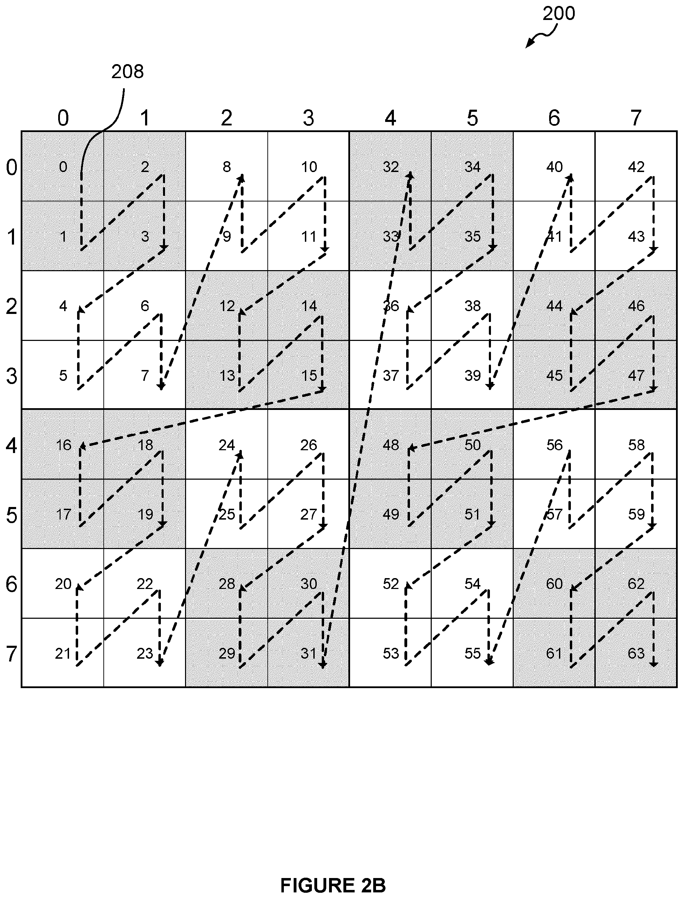

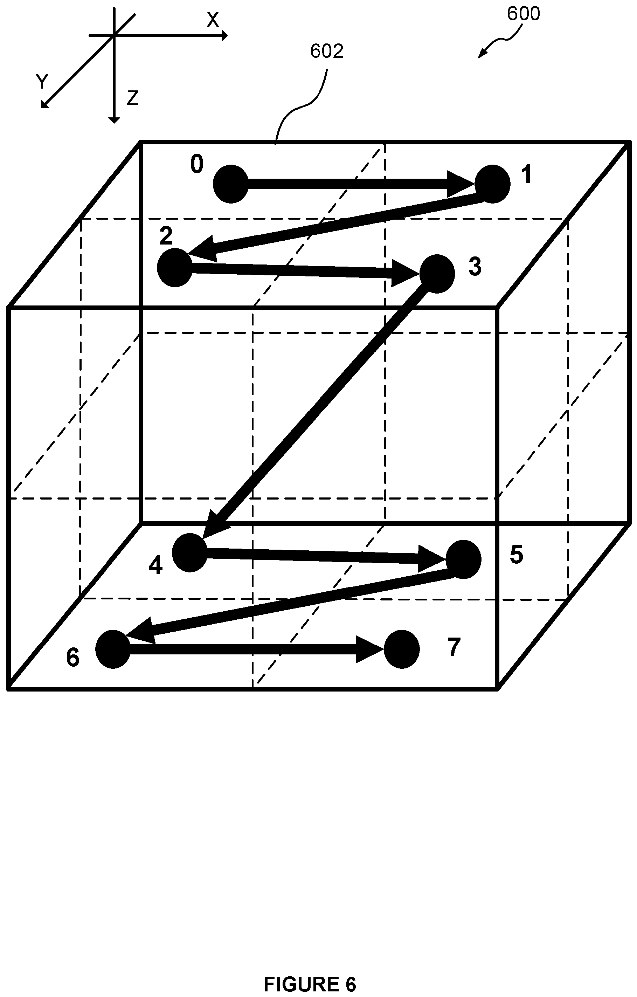

Reference to a 'Z-ordering function' or a 'multi-to-one dimension mapping function' should be understood as encompassing a variety of functions that encode multidimensional data into one-dimensional data in a way that preserves the spatial position of the multidimensional data points. The 'Z-ordering' function may also be referred to as a 'twiddle' function or an 'interleaved bits' function. Reference to 'Z-ordering functions' therefore includes the Z-order function known as the Morton order, and variations such as inverted N-order shown in figure 2B, and the 3D Lebesgue curve shown in figure 6. Yet more alternatives would be apparent to the skilled person and may be applicable on an equivalent basis to the functions described in this disclosure.

Reference to 'thread' in the present disclosure generally describes some work to be performed as part of the ray tracing or graphics processing process. In other words, a 'thread' is an operation to be performed with respect to particular input data. A thread may also be referred to as an 'invocation' or a 'work-item'. A group of threads may be referred to as a work packet. In the present disclosure, unless specified otherwise, a thread refers to a work item of this description. In the specific context of ray tracing, a thread generally pertains to one single item of workload, usually corresponding to a single ray. Once a thread has been sent for scheduling, it may be launched as a work-item. For example, a thread may identify a code module or shader module for a single ray. In other contexts, a 'thread' may alternatively refer to part of a multi-threaded processing environment (such as a graphics processing unit, GPU), i.e., a part of the hardware that performs an instruction (possibly in parallel with other threads). Embodiments described in the present disclosure may be applicable to graphics processing methods and systems in general. The following example pertains to ray tracing, but is not intended to limit the applicability of methods and algorithms described herein the ray tracing methods and systems.

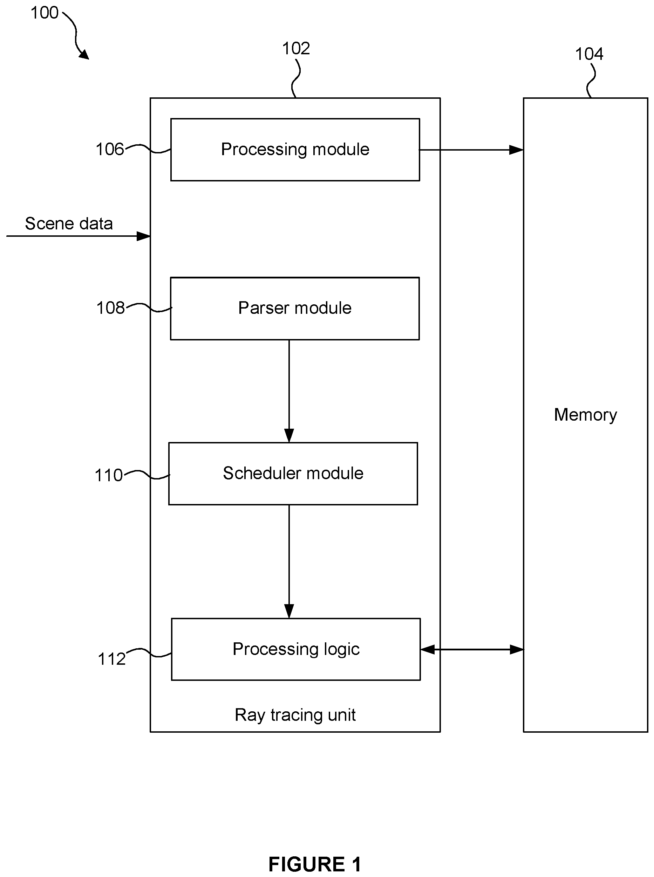

Figure 1 shows a ray tracing system 100 comprising a ray tracing unit 102 and a memory 104. The ray tracing unit 102 comprises a processing module 106, a parser module 108, and a scheduler module 110. In operation, the ray tracing unit 102 receives scene data, which may include ray data, geometric data, object data and the like defining aspects of the scene. Although the scene data is indicated as being received from an external source, in implementations the scene data may be received from the memory 104. The processing module 106 is configured to generate an acceleration structure based on geometric data and to send the acceleration structure to the memory 104 for storage therein. Alternatively, the acceleration structure may be pre-determined and form part of the scene data. Processing logic 112 can retrieve nodes (comprising data defining bounding volumes, e.g., the axis-aligned boxes corresponding to the nodes) of the acceleration structure from the memory 104 to perform intersection testing of rays against the retrieved nodes. The parser module is configured to implement an initial stage of the ray tracing pipeline. The parser module 108 is configured to parse scene data, specifically the multidimensional data containing threads identifying work packets for processing parts of the scene, and thus sending threads onwards to the scheduler module 110 for scheduling and further processing. The parser module may also be called a raytracing data master (RDM), or a command engine. In some ray tracing implementations, the scene data is also called a 'control stream', which is stored in memory 104, and determines a configuration of the ray tracing pipeline. The parser (i.e., the RDM) is thus configured to receive the control stream. The control stream may be processed sequentially as packets of a predetermined size (e.g., 64 bits each). Each packet of the control stream may be referred to as a 'block header', and each block header may contain information denoting the type of block header, and optionally may contain a payload. The control stream may also contain pointer to other structures in memory. In some examples, the block header contains thread grids which the RDM splits into thread groups.

In the context of ray tracing, ray tracing work is received as a grid, sometimes known as a thread grid. The parser module iterates through threads (also called work packets), within the thread grid in a serial manner (i.e., one by one, not in parallel). The parser module 108 may therefore generate coordinates for thread groups (being smaller 1D or 2D parts of the thread grid) which are then sent by the parser module to the scheduler module 110. In other words, the parser module 108 may divide the thread grid into thread groups and give each of these groups an X & Y coordinate (for a thread grid having two dimensions). All threads that exist within identified thread groups are passed on for further processing at the scheduler module 110, which in some examples is called a ray tracing scheduler (RTS) or ray acceleration cluster (RAC). Once received at the scheduler module 110, the scheduler module 110 may divide the thread group into work-items for further processing. The parser module 108 iterates over a thread group in one of two orders: stride/raster order, or twiddled/Morton/Z-order. Generally, for data that is multi-dimensional data, a Z-ordering function will be chosen by the RDM for the cache-related benefits described above.

In the present disclosure, the thread grid generally refers to a region in a scene from which work packets (containing threads, which may correspond to rays in a ray tracing context) are identified and scheduled to be processed. A thread grid can be 2D or 3D, and may even contain higher dimensions. Thus, a thread grid is referred to more generally as multidimensional data for rendering a scene in the present disclosure. In the present disclosure, a thread group is a 1D or 2D slice of the thread grid sent by the parser module 110 (which in a ray tracing context may be a command engine or ray data master) to the scheduler module 110. Thus, more generally, a thread group identifies a plurality of threads, or a work packet, to be processed. In the present disclosure, thread, or 'work-item', is a program that is executed by part of a processing unit, e.g., a core of a processing unit such as a graphics processing unit, GPU. Work-items can operate in parallel on multiple pieces of data, called instances. Generally, a work-item is a single instance, i.e., corresponds to a single ray. A ray is a construct that moves through a scene from an origin (not necessarily an origin of the space coordinate system of the scene) in a straight line for a fixed distance. Rays can interact with objects that they intersect with. The scheduler module 112 generates work-items that launch the rays and model their interactions with objects.

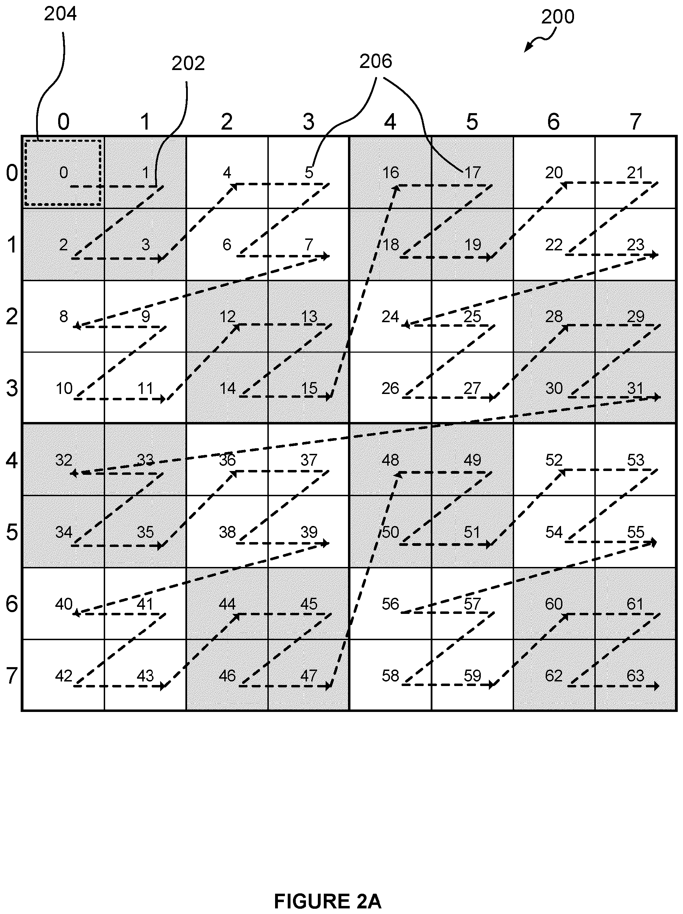

Figure 2A shows an example of a thread grid 200, comprised of 64 thread groups, and a Z-order (i.e., a Morton order) used to scan the thread groups 204. Each thread group comprises a plurality of individual threads (not shown). The thread grid thus represents multidimensional data representing a region of a scene to be rendered. A counter value 206 (also called a sequence value), from 0 to 63, labels each thread group with its corresponding position in the Morton sequence 202. Thus, the Morton order sequence shown represents one-dimensional data having been mapped from the 2-dimensional coordinate data defining the thread grid. In this case, the one-dimensional data is simply a list of integers that defines positions on the thread grid. The Z-order sequence is one-dimensional in the sense that it can be encoded using a single counter value. The X and Y coordinate positions of the thread grid 200 are marked, with indexing starting from zero, on the axes of the thread grid (i.e., the X coordinates on the upper side of the grid, and the Y coordinates on the lefthand side of the grid). The method of encoding the multidimensional data (in this example 2D) of the thread grid data into the 1D sequence in Figure 2A is by using the following bit-format function: YxYx YxYx YxYx YxYx. With this function, each bit of the binary representation of the counter value 206 maps onto a bit of the corresponding X-coordinate or Y-coordinate of the thread grid. Thus, advantageously, a single counter value can be used to encode a 2-dimensional coordinate. The following table shows this mapping in more detail for the first six counter values, represented by an 8-bit binary value:

| Counter value (Decimal) | Counter value (Binary) | X-coordinate (Binary) | Y-coordinate (Binary) | Coordinate (X, Y) |
|---|---|---|---|---|
| 0 | 0 0 0 0 0 0 0 0 | 0000 | 0000 | (0, 0) |
| 1 | 0 0 0 0 0 0 0 -1 | 0001 | 0000 | (1, 0) |
| 2 | 0 0 0 0 0 0 1 0 | 0000 | 0001 | (0, 1) |
| 3 | 0 0 0 0 0 0 1 1 | 0001 | 0001 | (1, 1) |
| 4 | 0 0 0 0 0 1 0 0 | 0010 | 0000 | (2, 0) |
| 5 | 0 0 0 0 0 1 0 1 | 0011 | 0000 | (3, 0) |

It can be seen from the table that alternating bits of the binary representation of the sequence value encode bits of the X and Y coordinates, respectively. The underlined values in the binary representation of the counter value represent bits that encode the X-coordinate. The scanning pattern produced by the 'YxYx YxYx' function thus produces a Z pattern which is fractal in nature because it recursively fills the space of the thread grid in a Z pattern which is repeated over an increasingly larger scale.

Figure 2B shows an alternative example of Z-ordering function, in this case, an inverted N-order 208. Similarly to figure 2A, figure 2B shows a thread grid 200 comprised of 64 thread groups and an inverted N-order used to scan the thread groups, and the X and Y coordinate positions are marked, with indexing starting from zero, and the upper and lower axes of the thread grid. The inverted N-order sequence 208 produced is, in effect, a diagonal mirror image of the Z-order/Morton function. This inverted N-order sequence can be obtained by using the following bit-format function: xYxY xYxY xYxY xYxY. Thus, the bits of the counter value that, in the Morton order function, encoded the X-coordinates, in the inverted N-order of figure 2B encode the Y-coordinates (and vice versa for the Y-coordinates and X-coordinates). Advantageously, as will be described in detail in the following examples, the methods for determining valid positions along the Morton order sequence apply equally, without modification, to both the Morton order shown in figure 2A and the inverted N-order example shown in Figure 2B.

The nature of the bit pattern used to encode Z-ordering functions in general (i.e., multi-to-one dimension functions) means that the largest representable value for each of the X and Y coordinates is a power-of-two value. However, the 'launch size' of the thread grid is different to the grid that actually contains threads (i.e., work items or work packets) that contain valid work to be performed. The region of the grid that contains work packets to be performed is referred to as the 'valid region' in this description. In other words, the region of the grid that contains work packets / threads to be processed for rendering the scene is referred to as the 'valid region'. Portions of the grid not within the valid region therefore do not contain threads or work packets defining or identifying processing instructions. A work packet may identify a plurality of threads, and each thread may pertain to an operation such as a ray tracing or shading operation for a ray.

The launch size of the thread grid - that is formed by virtue of using the Z-order - will typically have dimensions equal to a power-of-two. The Z-ordering functions therefore work efficiently in cases where the valid region has exact power-of-2 dimensions since the entire thread grid will be valid. The Z-ordering functions also work efficiently when the dimensions of the valid region are only slightly less than an exact power-of-two, because this results in only a small proportion of the thread grid being invalid. However, problems may arise when the dimensions of the valid region of the thread grid are slightly greater than an exact power-of-two. Applying Z-ordering when the valid region is slightly greater than an exact power-of-two results in generating a large number of invalid coordinates in the thread grid. Specifically, invalid coordinates are those coordinates that are representable using the maximum dimensions allowed by bit-functions of Z-ordering, but are not contained within the valid region. This problem will arise whenever the valid region does not have exact power-of-2 dimensions. However, the problem is exacerbated in cases where the valid region is only just greater than a power-of-two value, since this results in a large proportion of the representable thread grid (which does have dimensions equal to a power-of-two) containing invalid coordinates.

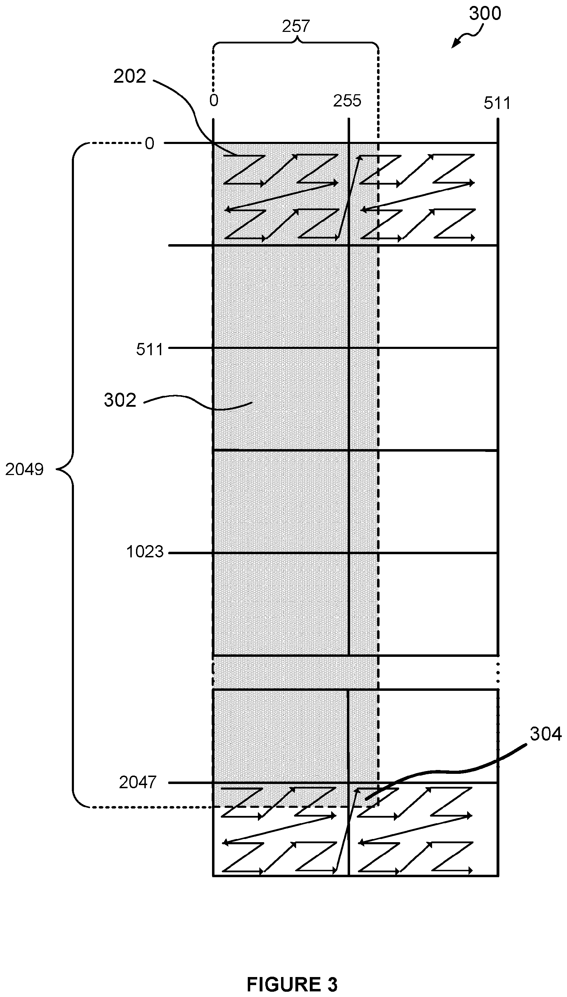

Figure 3 shows a representative example of a full-sized thread grid 300 and shows the Z-/Morton order sequence 202 used to iterate over the thread groups of the grid. Individual thread groups are not shown in this figure. The valid region 302 is indicated as the shaded region. In this example, the maximum width of the thread grid is equal to 512, i.e., comprising 512 thread groups, and the maximum height of the thread group is equal to 4096, i.e., comprising 4096 thread groups. The full height of the thread grid is not shown in this example. The dimensions of the thread grid in this example are thus 512 x 4096. These dimensions, being the largest representable dimensions within the thread grid, represent the launch size of the grid. The indexing of thread groups in both dimensions starts from zero, as shown. The number of threads per thread group may vary, however, and does not directly affect the working of presently described embodiments. The number of threads per thread group can define the maximum dimensions of the thread grid.

The valid region 302 in this case comprises a thread group width of 257 (i.e., position 0 to position 256 in the X dimension) and a thread group height of 2049 (i.e., position 0 to position 2048 in the Y dimension). This particular case therefore represents a realistic scenario that is also a particularly problematic example, since a large portion of the thread grid is invalid, i.e., a large portion of the representable thread grid's dimensions are just over a power-of-2 boundary (e.g., 257 width and 2049 height). Consequently, when the Z-order function 202 (shown in figure 3, though not to scale) scans through the thread grid, a large number of "skip cycles" or "null cycles" will be produced, corresponding to the coordinates of the thread grid that do not contain work packets. It can be seen, for example, that the right-most part of the Z-order scan 202 occupies an invalid portion of the thread grid.

If the thread grid 300 and valid region 302 were handled by a raytracing data master (RDM) or parser module 108 in a real example, using an unmodified Morton 202 as shown in figure 3, around 41 thousand skip cycles would be produced just to reach the final valid position 304, marked on the valid region, of the thread grid. For each value of the one-dimensional data in the Z-order sequence considered by the RDM, the RDM determines whether the coordinate position defined by the sequence value lies within the valid region. This can be determined by converting the sequence value into the coordinate using the bit-function defining the Z-order. If the RDM determines that the counter value corresponds to an invalid position, it simply skips over that value and does not send the thread group/work packet identified by that coordinate for processing. Specifically, skipped coordinates are not sent down for scheduling/processing at the scheduler module 110 (which in some examples is a ray acceleration cluster, RAC). Following the Z-order scan under the normal parsing regime, the counter value would then be incremented by 1 and the process repeated. Repeatedly determining the coordinate values from the counter value, and subsequently repeatedly determining whether the coordinate is valid (i.e., by comparing each coordinate value to the corresponding maximum dimension that defines the valid region), can therefore waste a significant amount of time when there exist a great number of invalid coordinate positions within the thread grid.

Consequently, the normal parsing regime of incrementing the counter value defining the sequence of the Z-order by 1 can be inefficient. It would therefore be advantageous to implement a method by which the next valid position along the Z-order can be efficiently reached or determined. In other words, it would be beneficial if invalid coordinate positions defining non-valid thread groups could be efficiently skipped over. It would also be advantageous if one algorithm could be applied in the same way to 'skip' over invalid coordinate positions for a variety of grid sizes, and a variety of dimensions (e.g., 2D, 3D, or higher dimensions), and for an arbitrarily sized valid region. The foregoing embodiments and examples of this description describe such an advantageous method.

The inventors have established that it is possible to determine how to skip large numbers of invalid coordinates for a given set of multidimensional data (e.g., a 2D thread grid) by targeting the appropriate bit of the one-dimensional sequence value encoding the Z-order for that multidimensional data. The objective is to skip forward to a new value within the one-dimensional sequence of data by a 'jump value' that i) has the potential to skip at least one sequence value defining an invalid position and ii) reach the next valid coordinate in the sequence without skipping over it. For a given value in the one-dimensional data, the number of values in the sequence to skip over may be referred to as the 'overflow value', jump value' or 'skip value'. For a given counter value, when represented in binary, each bit represents one dimension/coordinate component of the multidimensional data. In the present examples, the valid region always occupies the lower-most dimensions (i.e., the top left of the thread grid in figure 3). Therefore, in order to determine an overflow value, a binary value is chosen to add to the sequence value to obtain a new (or trial) sequence value. Ideally, at least one dimension of the new coordinates represented by the trial value will be reduced. In other words, the objective is to efficiently skip ahead to a sequence value (in one or more steps) representing the next valid position in the grid. The objective is thus to skip ahead to the next valid position without testing at least some of the intervening sequence values. At the binary representation level, determining the overflow value thus corresponds to calculating an overflow value which, when added to the value of the Z-ordering sequence under consideration, causes a bit defining the out-of-bounds coordinate value that is a '1' in to flip to a '0'.

For the sake of explanation, a 2D example of a thread grid is used in the following example. In general, it is assumed that the valid region lies at the upper-left of the representable thread grid. In general, it is also assumed in this disclosure that the valid region of the multidimensional data starts at the lowermost position in each dimension and that only the coordinate positions towards the maximum dimension values are invalid. With this assumption in mind, it is therefore guaranteed that an 'out of bounds', i.e., invalid, coordinate value will contain at least one coordinate component value that is greater than the corresponding maximum dimension of the valid region. In the 2D grid example, each bit of the Z-order sequence counter represents either an X or a Y coordinate. It should be apparent that adding a value which only increases a '0' bit to a '1' bit will increase exactly one of the X or Y coordinate values, and leave the other coordinate value unchanged. Increasing a coordinate value in an attempt to return to the valid region would thus be of no use, and doing so would in fact guarantee that the new coordinate value would be in an invalid position. Therefore, the objective of presently disclosed methods is to target a bit of the sequence value that is a '1' bit, in order to cause an overflow resulting in 'flipping' that '1' bit to a '0'. This therefore allows the possibility that at least one coordinate value, and possibly both coordinate values, will be reduced, so as to yield the possibility that the new counter value will represent a valid coordinate position.

The inventors have established that this overflow value can be determined in dependence on determining a least significant bit (LSB) of the binary representation of the one-dimensional data value which is a '1'. In one example, the overflow value is determined to have a magnitude equal to the power-of-two value represented by the LSB that is a 1. For example, in the binary number 0b01100100, the least significant '1' bit is the third bit from the right, which represents the value 2². Notionally, this corresponds to counting the number of contiguous zeros in the least significant bit-position of the binary representation of the sequence value. The overflow value is thus equal to raising 2 to the power of the counted number of contiguous zeros, i.e., in the above example, 2².

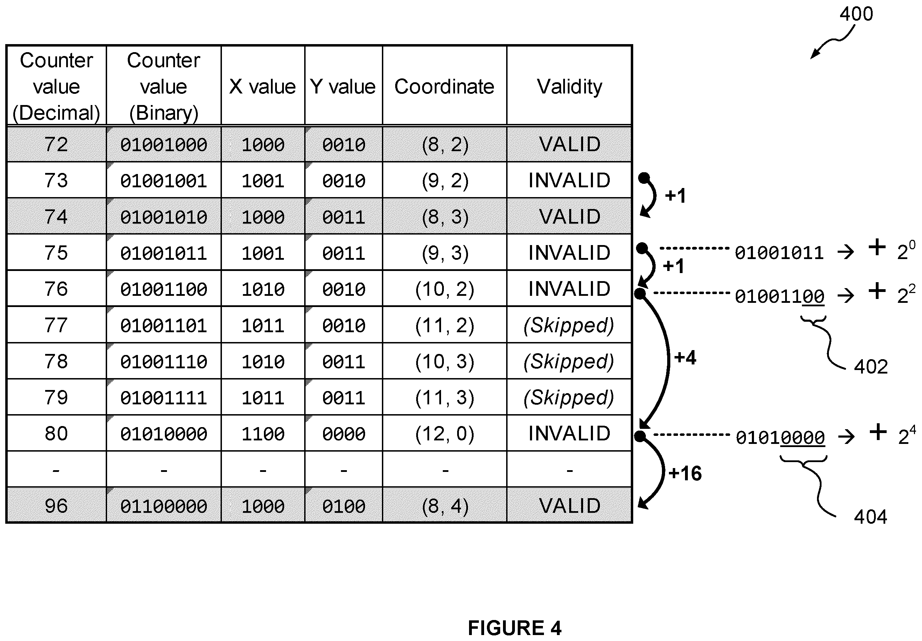

Figure 4 is a table 400 containing a worked example, applied to a portion of a Z-order Morton sequence, for skipping over invalid grid values. The bit-format of the Morton order in this example is YxYx YxYx, thus the X and Y coordinates are each represented by a 4-bit value. For completeness, in the present disclosure, the notation 'YxYx YxYx' defines the counter value in the following way: Y⁽³⁾x⁽³⁾Y⁽²⁾x⁽²⁾Y⁽¹⁾x⁽¹⁾Y⁽⁰⁾x⁽⁰⁾, which thus encodes X coordinate value: x⁽³⁾x⁽²⁾x⁽¹⁾x⁽⁰⁾ and Y coordinate value: Y⁽³⁾Y⁽²⁾Y⁽¹⁾Y⁽⁰⁾. The counter value represents the value of the one-dimensional Z-order sequence under consideration. The counter value is represented by an 8-bit value that interleaves the binary representations of the X and Y coordinates. The launch size of the grid is therefore a 16 x 16 grid. The valid region in this example is deemed to have dimensions 9 x 15. Thus, the maximum valid dimensions are X = 8 and Y = 14 (with indexing starting at zero). The table in figure 4 shows a counter value starting from 72. This value corresponds to the coordinate (8, 2) and is therefore valid. Thus, therefore the counter value is incremented by 1 as normal. The next value, 73, is invalid because its X-coordinate is 9, and so it is out of bounds. The binary representation of 73, 0b01001001, has no zeros in the least significant place. In this case, a conservative overflow value that can be added to the counter/sequence value, and which guarantees that there is no risk of skipping over subsequent valid counter values, is 1. In other words, when the LSB of the counter value is 1, the jump value added is 1. This corresponds to adding 2⁰, where the exponent value is equal to the number of contiguous zeros in the least significant bit-position.

The next invalid counter value reached is 75. This also has a '1' bit in the least significant place, and so the jump value added is 1, as indicated on the right-hand side of the table. The next counter value, 76, is also invalid (its X-coordinate is 10, and the maximum allowed X-coordinate is 8) and has exactly two contiguous zeros starting from the least significant bit-position (i.e., 01001100, where the underlined zeros indicate the contiguous zeros 402 in the least significant bit positions). Consequently, the largest jump value that can be added is equal to 2 raised to the power of the number of contiguous zeros, two, i.e., 2², which is 4. Adding a value of '4' corresponds to adding the binary value 100, which thus causes the '1' bit in the least significant position (third from the right) to overflow. It can be seen from the table that the counter values that are skipped over, i.e., 77, 78, 79, all represent Z-order coordinate positions that are out of bounds (i.e., the X coordinate is still greater than 8). The next value reached using this method is 80, which is another invalid value (its X-coordinate is 12) and whose binary representation is 01010000. The least-significant bit that is a '1' is thus the fifth bit from the right, and this represents the value power of 2 value 2⁴. Determined another way, as indicated in figure 4, this value has four contiguous zeros 404 starting from the least significant bit-position (i.e., 01010000). Consequently, the overflow value determined is equal to 2 raised to the power of the number of contiguous zeros, two, i.e., 2⁴, which is 16. Adding a value of '16' corresponds to adding the binary value 10000, which thus causes the '1' bit in the least significant position (fifth from the right) to overflow.

The method of determining the overflow value, exemplified above, can be summarised with the following steps:
1. Determine the X and Y coordinate values represented by the counter value, using the Z-order function YxYx YxYx;
2. Determine whether the coordinate is valid by determining:
   a. Whether the X coordinate value is greater than the maximum valid region width:
   b. Whether the Y coordinate value is greater than the maximum valid region height:
3. If the coordinate corresponds to a valid position, increment the counter value by 1 and return to step 1;
4. Else, if the coordinate corresponds to an invalid position: determine the overflow value by generating the overflow value to have a magnitude equal to the power of 2 value represented by the least significant bit (of the binary representation of the sequence value) that is a 1 (which, notionally, corresponds to counting the number of contiguous zeros starting from (and including) the LSB in the binary representation of the counter/sequence value, and raising 2 to the power of the number of contiguous zeros counted);
5. Add the overflow value to the counter value and return to step 1.

As mentioned above, the overflow value that is determined is conservatively chosen to equal the power-of-2 value represented by the least significant bit (LSB) that is a 1. This is a conservative value because adding this value guarantees that there is no risk of skipping over subsequent valid counter values. To demonstrate this, consider the binary value 0b01010000 (80, in Decimal). Applying the algorithm, the overflow value calculated for this number is 0b10000 (16, in Decimal), since this represents the value of the least significant 1-bit. If the overflow value were any (positive) integer lower than 16, adding this overflow value would guarantee that the next sequence value would also be invalid since any number lower than 16 could not possibly flip the least significant that is a 1-bit. It is therefore guaranteed that the value represented by the least significant bit that is a 1-bit (in this case, 16), and cannot possibly overshoot the next 'valid' coordinate in the sequence. Thus, the overflow value is often chosen conservatively in this way, i.e., to be the lowest possible value that causes the least significant bit that is a 1 (in the binary representation of the sequence value under consideration) to flip to a 0.

There may be cases, however, where a larger overflow value is chosen which nevertheless causes the least significant bit that is a 1 to be flipped. For example, taking the example of counter value 75 in figure 4, the next two 'overflow values' of 1 and 4 could be pre-determined, and thus an overflow value of '5' could be added in one step. For example, it could be determined that adding a '1' to the counter value of 75 would increase the X coordinate value since the 3 least significant bits are '..011', and thus the next value would end with '..101'. Thus, in some examples, the pattern of '..011' in the 3 least significant bits of a counter value could be recognised as a signal that a '5' may be added in one step, rather than adding '1' and then a '4' in two steps.

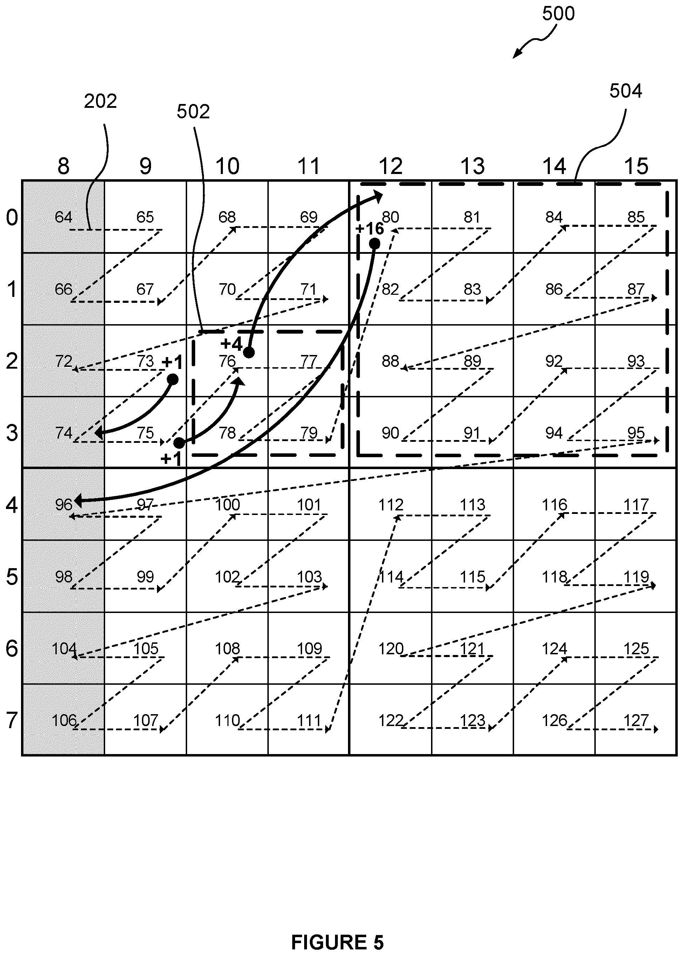

Figure 5 shows a portion of the grid 500 and the Z-order sequence 202 corresponding to the table shown in 4. For brevity, only the upper right quadrant of the full 16x16 grid is shown in figure 5, and so only the X coordinates values from 8 to 15 and only the Y coordinate values from 0 to 7 are shown. All coordinate positions that form part of the valid region are indicated via shading. Specifically, of the coordinate positions shown in figure 5, coordinate positions 64, 66, 72, 74, 96, 98, 104, 106 are valid coordinate positions, and the remaining positions are invalid. The mathematical logic explained with respect to figure 4 is illustrated graphically in figure 5. For example, it can be seen that, at position 76, the next three values in the sequence (77, 78, 79) all belong to the same 'Z' formation which forms a 2x2 unit square 502 indicated by the dotted area in figure 5. In this 2x2 unit square, it can be seen that, at positions 77, 78, and 79, the X coordinate is guaranteed to be at least as great at the X coordinate at the start of the 'Z' formation as position 76. Thus, it would be wasteful to test positions 77, 78, 79 since it can be determined that none of those positions will be valid. Consequently, a jump value of 4 can be added to 76 to reach position 80.

Position 80 also forms the start of another 'Z' formation pattern that occupies a 2x2 unit square. However, position 80 also forms the start of a macro 'Z' formation pattern that occupies a 4x4 unit square 504, indicated with another dotted area. In every unit of the macro 4x4 square which follows the Z-order from position 80, the X coordinate is also at least as great as the X coordinate of position 80. Thus, it would be wasteful to test positions within the 4x4 unit square 504 beyond position 80. Consequently, as indicated, an overflow value of 16 can be added to 'escape' the 4x4 unit square to reach the next potential coordinate position. In this case, position 96 is reached which lies in the valid region. Advantageously, applying the overflow value at positions 74 to 96 in the example above only requires that the validity of the coordinate position be tested four times. None of the one-dimensional sequence values in the 4x4 unit square 504, except for position 80, need to be tested to determine whether the values define positions that lie within the valid region. By contrast, if the normal Z-order parsing regime were followed, each coordinate position would be tested thus resulting in 22 validity tests (inclusive of positions 74 to 95). The present algorithm therefore enables a large proportion, indeed the majority, of invalid coordinates to be skipped thus saving a significant amount of computational time.

In more detail, the presently described method allows exponentially increasing subsets of the thread grid to be skipped. This can be seen by considering the bits of the binary representation of the counter value that are 'flipped' by the algorithm. Considering the scenario (such as shown in figure 5) where the X coordinate is out of bounds, the bits of the counter value representing the 'X' coordinates lie in 'even' locations of the binary representation, counting from right to left (and indexing from zero). Thus, for the Z-order function YxYx YxYx, the magnitude of the overflow value applied will be an even power of two when the X coordinate is out of bounds: i.e., 2⁰ = 1, 2² = 4, 2⁴ = 16, 2⁶ = 64, etc. Thus, even though the overflow values are determined in trial and error fashion at runtime (i.e., as opposed to all being calculated and stored prior to runtime, although this is also possible), the magnitude of successive overflow values exponentially increases in size, for example, as is the case for counter values 75, 76, and 80, in Figures 4 and 5. Moreover, the overflow values can be determined using computationally efficient bitwise operations (specific examples described in more detail below), avoiding the use of costly multiplication logic that would introduce undesirable latency. In some examples, the overflow value may be calculated using operations selected from the group of: unary bitwise operations (operations requiring only one binary number as input, such as a NOT operation); bitwise comparison operations (operations requiring only two binary numbers as input, e.g., an 'AND' or 'XNOR' operation); and addition operations. Therefore, a general advantage of the algorithms disclosed herein is that they can quickly reach the next coordinate position within the valid region of a grid.

It should be appreciated that an equivalent method can be applied when a 'Y' coordinate is out of bounds. In this case, the 'odd' bits of the binary representation of the counter value encode the Y-coordinates when using the Z-order function YxYx YxYx YxYx etc (counting from the LSB, and indexing from zero). Thus, to 'flip' the correct Y-bit, odd powers of two would be added to the sequence value, i.e., 2¹ = 2, 2³ = 8, 2⁵ = 32 etc. As before, the overflow value can again be generated by making the overflow value equal to the power of 2 value represented by the least significant bit that is a '1'. Again, this notionally corresponds to counting the number of contiguous zeros starting from the LSB.

### Inverted-N example

The Z-order pattern encompasses a range of different functions that map multidimensional data into a one-dimensional sequence. An alternative bit-function to the YxYx YxYx function that produces the Z-pattern shown in figure 2A is the inverted N-order sequence 208, which is, in effect, a diagonal mirror image of the Z-order pattern. An example of this is shown in figure 2B. The N-order sequence can be obtained by using the bit-format function xYxY xYxY xYxY xYxY.

Advantageously, the above-described algorithm used to provide an efficient look-ahead to the next valid coordinate for a Z-type bit-format function can be applied, in unmodified form, to an inverted-N function. Similarly, the magnitude of the overflow values produced using the algorithm for the inverted-N type functions also increases exponentially in size. Thus, in general, the presently-described algorithm again enables a significant number of invalid positions, or 'null cycles', to be entirely skipped over.

To give a worked example of the inverted-N type function using the bit-format function Y xYxY xYxY, suppose that a representable grid size is 16x32, where the dimensions of the valid region are 10x19 (thus, indexing from zero, an X value of 10 is invalid and a Y value of 19 is invalid). This format means that the X coordinates are encoded using 4 bits, and the Y coordinates using 5 bits. The following table illustrates the overflow values (i.e., the jump values) that can be obtained, starting from a sequence value of 300. The underlined values in the binary representation of the counter value represent bits that encode the X value:

| Counter value (Decimal) | Counter value (Binary) | X value | Y value | Coordinate | Validity |
|---|---|---|---|---|---|
| 300 | 0b 100101100 | 0b0110 | 0b10010 | (6, 18) | VALID |
| 301 | 0b 100101101 | 0b0110 | 0b10011 | (6, 19) | INVALID: skip +2⁰ |
| *302* | 0b 100101110 | 0b0111 | 0b10010 | (7, 18) | VALID |
| 303 | 0b 100101111 | 0b0111 | 0b10011 | (7, 19) | INVALID: skip +2⁰ |
| 304 | 0b 100110000 | 0b0100 | 0b10100 | (4, 20) | INVALID: skip +2⁴ |
| *Skip 305 to 319* | | | | | |
| 320 | 0b 101000000 | 0b0000 | 0b11000 | (0, 24) | INVALID: skip +2⁶ |
| *Skip 321 to 383* | | | | | |
| 384 | 0b 110000000 | 0b1000 | 0b10000 | (8, 16) | VALID |

Therefore, the series of overflow values from sequence values of 303 to 384 are 1, 16, and 64. This series of overflow values form a different pattern to the pattern observed for the Z-order example shown in figures 4 and 5, though the principle remains the same that the magnitudes of successive overflow values exponentially increase in size.

The methods described above have been described with reference to 2-dimensional example grids. However, the principles and algorithms can be applied in exactly the same way for 3D multidimensional data, e.g., where a Z-ordering function maps 3D data into one dimension.

Figure 6 shows an example of a 3D Z-ordering function 600 known as a Lebesgue 3D curve. This function iteratively fills a 3D volume in a 3D fractal pattern. The first eight values of the one-dimensional sequence mapped by the Lebesgue 3D function are shown in the volume 602 shown in figure 6, with the corresponding counter/sequence value marked on the figure. The arrows indicate the order of the sequence. The positions of the data points represent the 3D spatial positions defined by each value of the sequence of eight values, as mapped by the Lebesgue 3D function. The dashed lines in figure 6 also serve to indicate the eight spatial positions within the cube. The volume 602 can therefore represent a thread grid in some examples, e.g., in which the volume 602 represents a 3D region of a 3D scene. The Lebesgue 3D curve is mapped using the Z-ordering bit format of 'ZyxZyx ZyxZyx' etc. The table below shows the correspondence between the one-dimensional sequence data and the 3D coordinates for the first 8 values of the sequence:

| Counter value (Decimal) | Counter value (Binary) | X value | Y value | Z value | Coordinate (X, Y, Z) |
|---|---|---|---|---|---|
| 0 | 0b000 | 0b00 | 0b00 | 0b00 | (0,0,0) |
| 1 | 0b001 | 0b01 | 0b00 | 0b00 | (1,0,0) |
| 2 | 0b010 | 0b00 | 0b01 | 0b00 | (0,1,0) |
| 3 | 0b011 | 0b01 | 0b01 | 0b00 | (1,1,0) |
| 4 | 0b100 | 0b00 | 0b00 | 0b01 | (0,0,1) |
| 5 | 0b101 | 0b01 | 0b00 | 0b01 | (1,0,1) |
| 6 | 0b110 | 0b00 | 0b01 | 0b01 | (1,1,1) |
| 7 | 0b111 | 0b01 | 0b01 | 0b01 | (1,1,1) |

To show that the same concept of the overflow value can be applied to 3D examples, consider an example in which the launch size of a 3D grid is 4x4x4, and where the Lebesgue 3D curve is mapped using the 6-bit Z-ordering format of ZyxZyx. This 4x4x4 example would correspond to a cube formed of eight of the cubes shown in figure 6, i.e., such that the counter counts from 0 to 63. Each of the X, Y, and Z coordinate values is therefore represented by a 2-bit binary value. Let the valid region of this thread grid extend to Z=1, Y=3, X=1, i.e., representing a quarter of the 'launch size' of the cube formed by the 3D grid. The length of the one-dimensional sequence would therefore be 64 values (0 to 63). Of these values, the sequence values defining positions within the valid region defined by maximum values Z=1, Y=3, X=1 are [0, 1, 2, 3, 4, 5, 6, 7, 16, 17, 18, 19, 20, 21, 22, 23], and no other values. As before, an objective of the modified algorithm would be to iterate over the one-dimensional sequence values (0 to 63) by skipping over as many of the invalid sequence values as possible.

Based on the valid sequence values listed above, it can be seen that the first invalid sequence value is 8, whose binary representation is 0b001000, corresponding to coordinate values Z=0, Y=0, X=2 (i.e., the X-coordinate is out of bounds). Using the same algorithm as before, the least significant bit that is a '1' is in the fourth position and represents the value 2³. Thus, the overflow value of 8 can be added to the sequence value of 8 to reach 8+8=16. It can be seen from the list above that the next valid sequence value in the list is 16, thus, the algorithm in this case successfully skips over all invalid sequence values 9 to 15 (inclusive). The next invalid sequence value in the 1D sequence is 24, whose binary representation is 0b011000, and which corresponds to coordinate values Z=0, Y=2, X=2 (i.e., the X-coordinate is again out of bounds). As before, the least significant bit that is a '1' is in the fourth position and represents the value 2³. An overflow value of 8 can therefore be added to the sequence value of 24 to reach 8+24=32, whose binary representation is 0b100000. Once 32 is reached, the remaining values of the sequence would be skipped over in one go since the least significant bit that is a '1' in the binary representation of 32 is 32 itself. Thus, an overflow value of 32 may be added to 32, thus reaching the end of the sequence (63) without having to test any of the invalid values from 33 onwards.

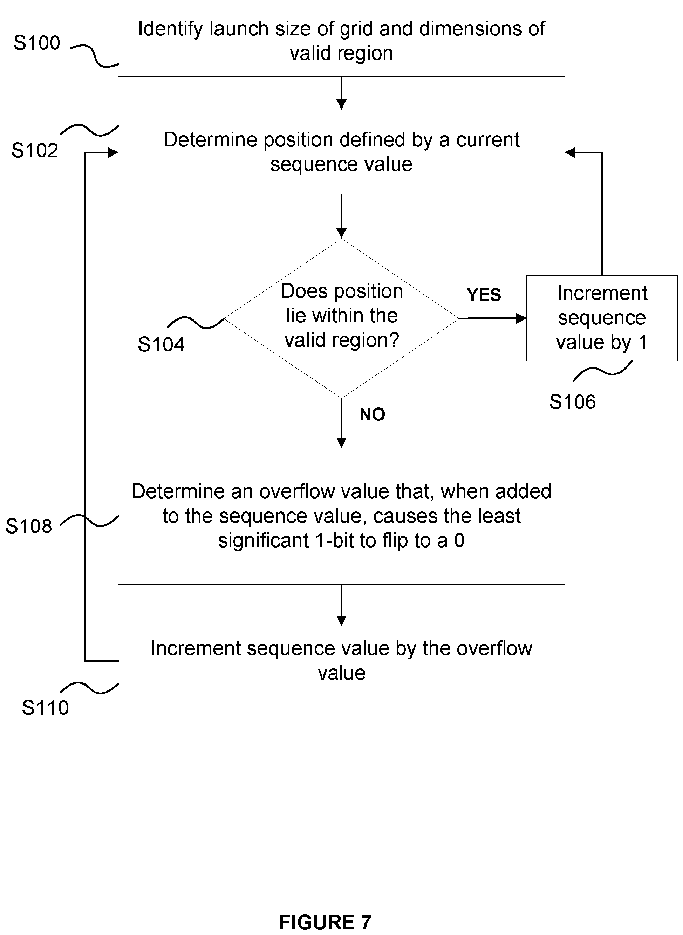

Figure 7 shows a flowchart of a method for iterating over a sequence of 1-dimensional data, representing multidimensional grid data, in order to determine the values of the 1-dimensional data defining valid regions of the grid as efficiently as possible. This method thereby determines a sequence that identifies work packets (because the 'valid region' is defined as the region of the grid that contains work packets) to be processed for rendering the scene.

Step S100 comprises identifying the launch size of the grid and the dimensions of the valid region within the grid. The grid represents multidimensional data representing part of a scene and may be 2D or 3D, or have higher dimensionality. The launch size of the grid may be identified by the bit format of the Z-ordering function used to map the multidimensional data into a 1-dimensional sequence. In practice, the launch size of the grid need not be explicitly determined or identified, since the launch size is defined by the bit format of the Z-ordering function. In other words, a Z-order function of YxYx YxYx represents a launch size of 16x16, since each of the X and Y coordinate values are represented by 4-bit values, thus giving maximum X and Y dimensions of 16 grid units (e.g., thread groups) each.

Step S102 comprises determining a position defined by the current sequence value. When starting a scan of a grid, the first sequence value will typically be 0, i.e., the first value in the 1-dimensional sequence, e.g., corresponding to coordinates (0, 0). The position may be determined by converting the sequence value into a multidimensional coordinate using the mapping defined by the Z-ordering function. Thus, for a 2D grid, the X and Y coordinates are extracted from the interleaved bits of the binary representation of the sequence value, as defined by the Z-ordering function.

Step S104 comprises determining whether the position determined in S102 lies within the valid region. This may comprise determining whether the multidimensional coordinate determined in S104 falls within the identified dimensions of the valid region. For example, the valid region may be defined by boundary values, one boundary value for each coordinate, where the boundary values may be a maximum value. For example, in figure 5, the boundary values for the valid region are the maximum values of X = 8 and Y = 14 (with indexing starting at zero). Thus, each coordinate value of the position determined in S102 can be compared to its respective maximum boundary value. In practical examples, it may be unnecessary to test all coordinates against their respective boundary values, since the validity of the position can be determined based on determining that at least one coordinate value is out of bounds. For example, if the X coordinate is out of bounds, the Y coordinate need not be tested.

If it is determined at step S104 that the position lies within the valid region, the sequence is incremented by 1 at step S106 (i.e., a counter corresponding to the sequence is increment by 1) and the next value in the 1D sequence is tested at step S102.

If it is determined at step S104 that the identified position does not lie within the valid region, the method progresses to step S108. As step S108, an overflow value is determined which, when added to the sequence value, causes the least significant 1-bit to flip to a 0. The addition of the overflow value to the sequence value provides the possibility, by flipping the least significant 1-bit, that at least one coordinate value will be reduced. Thus, it is possible that the next value reached (e.g., the 'trial' value) may define a valid position within the grid. In some examples, the overflow value chosen may be the most conservative value: the most conservative overflow value is equal to the power-of-2 value represented by the least significant 1-bit of the binary representation of the sequence value. Advantageously, this conservative value is also a very efficient overflow value to calculate. As mentioned previously, the conservative overflow value is the lowest possible value that causes the least significant 1-bit (in the binary representation of the sequence value under consideration) to flip to a 0.

Step 110 involves incrementing the sequence value by the overflow value, i.e., adding the calculated overflow value to the sequence value. In this disclosure, the sum of the sequence value under consideration and the overflow value may be referred to as the 'trial value'. There is no way of knowing, without testing, whether the trial value defines a valid position within the grid. Therefore, the method returns to S102 at which point the trial value calculated at step S110 is tested via steps S102 and S104 to determine whether the trial value defines a position within the valid region.

Figure 7 is intended only to illustrate a method of efficiently determining portions of 1-dimensional sequence data identifying work packets to be processed for rendering a scene. However, figure 7 does not indicate what is done with the work packets (corresponding to thread groups) once they have been identified. As mentioned above, in the context of a ray tracing system, the method of figure 7 may correspond to iterating over a thread grid to determine valid thread groups. On determining that a sequence value (corresponding to a thread group) is valid, the entity iterating over the grid, which may be a raytracing data master (RDM) or more generally a parser module 108, sends the thread group for scheduling and/or further processing at a scheduler module 110 (e.g., a ray tracing scheduler). Thus, at S106, in ray tracing or other graphics processing examples, in response to determining that the thread group position does lie within the valid region, the thread group would be sent for scheduling and/or processing, e.g., sent by a parser module 108 to a scheduler module 110.

### Implementation example

Part of the advantage of the algorithm described in this disclosure is that it can be implemented using only bitwise operations, thus avoiding computationally expensive multiplication logic. The above explanations of the algorithm refer to powers of two, and other references are made to counting a number of contiguous zeros. However, references to exponents and to bit counting are mainly for explanatory purposes. Computing an exponent is an expensive operation for a processor and so, in practical embodiments of the method, this is avoided when calculating the overflow value. Instead, the algorithm can advantageously compute the overflow value without having to compute an exponent. Furthermore, the algorithm need not actually 'count' the number of contiguous zeros starting from the least significant bit. Instead, bitwise operations and additions can be used to determine the overflow value.

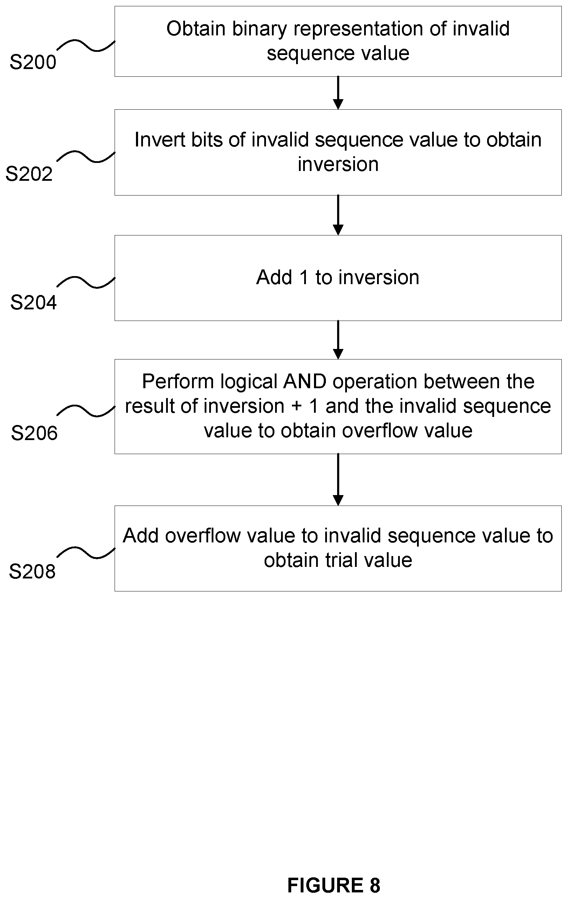

Figure 8 is a flowchart showing an example algorithm for obtaining an overflow value from a sequence value, where the overflow value is the conservative value equal to the power-of-2 value represented by the least significant 1-bit of the binary representation of the sequence value. The steps of the flowchart are illustrated with respect to a practical example where the sequence value under consideration is 0b110011110000 (3312 in decimal):

| **Description** | **Operation** | **Result** |
|---|---|---|
| S200: Obtain Invalid sequence value | - | 110011110000 |
| S202: Invert bits of invalid sequence value to obtain inversion | NOT 110011110000 | 001100001111 |
| S204: Add 1 to inversion | 001100001111 + 1 | 001100010000 |
| S206: Perform logical AND operation between the result of inversion + 1 and the invalid sequence value to obtain overflow value | 001100010000 AND 110011110000 | 000000010000 |
| S208: Add overflow value to invalid sequence value to obtain trial value | 110011110000 + 000000010000 | 110100000000 |

As can be seen in the table, the only operations needed to obtain the overflow value bitwise operations and additions. Specifically, the only operations required involve unary bitwise operations; bitwise comparison operations; and addition operations. In this case, the operations involve a bitwise inversion (corresponding to a logical NOT) at step S202, an addition at step S204, a bitwise 'AND' comparison at step S206, and another addition at step S208 to obtain the trial value. Furthermore, it should be appreciated that the combination of i) inverting the bits of a value and ii) adding 1 corresponds to calculating the 'two's complement' of a binary representation. Thus, in some examples, logic may be employed to simply calculate the two's complement of a number in order to carry out the operations of steps S202 and S204.

Generally, the advantage of the bitwise operations described in figure 8 is that they obviate the need to use computationally expensive multiplication logic, or other computationally expensive operators like calculating an exponent. Thus, at a bit-representation level, the processor, logic, or hardware that computes the overflow value does not need to 'count' the number of contiguous zeros in the least significant position and does not need to 'identify' the position of the least significant 1-bit, as such. Instead, the bitwise operations described above are performed which, in effect, determine an overflow value whose magnitude is equal to the magnitude of the value represented by the least significant bit (of the binary representation of the sequence value) that is a 1.

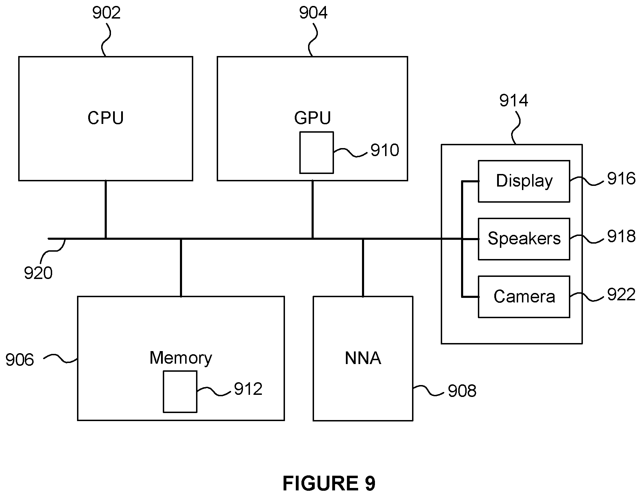

Figure 9 shows a computer system in which the graphics processing systems described herein may be implemented. The computer system comprises a CPU 902, a GPU 904, a memory 906, a neural network accelerator (NNA) 908 and other devices 914, such as a display 916, speakers 918 and a camera 922. A processing block 910 is implemented on the GPU 904. In other examples, one or more of the depicted components may be omitted from the system, and/or the processing block 910 may be implemented on the CPU 902 or within the NNA 908. The components of the computer system can communicate with each other via a communications bus 920. A store 912 is implemented as part of the memory 906.

The ray tracing unit of figure 1 are shown as comprising a number of functional blocks. This is schematic only and is not intended to define a strict division between different logic elements of such entities. Each functional block may be provided in any suitable manner. It is to be understood that intermediate values described herein as being formed by a ray tracing unit or processing unit need not be physically generated by the ray tracing unit or processing unit at any point and may merely represent logical values which conveniently describe the processing performed by the ray tracing unit or processing unit between its input and output.

The ray tracing unit or processing unit described herein may be embodied in hardware on an integrated circuit. The ray tracing unit or processing unit described herein may be configured to perform any of the methods described herein. Generally, any of the functions, methods, techniques or components described above can be implemented in software, firmware, hardware (e.g., fixed logic circuitry), or any combination thereof. The terms "module," "functionality," "component", "element", "unit", "block" and "logic" may be used herein to generally represent software, firmware, hardware, or any combination thereof. In the case of a software implementation, the module, functionality, component, element, unit, block or logic represents program code that performs the specified tasks when executed on a processor. The algorithms and methods described herein could be performed by one or more processors executing code that causes the processor(s) to perform the algorithms/methods. Examples of a computer-readable storage medium include a random-access memory (RAM), read-only memory (ROM), an optical disc, flash memory, hard disk memory, and other memory devices that may use magnetic, optical, and other techniques to store instructions or other data and that can be accessed by a machine.

The terms computer program code and computer readable instructions as used herein refer to any kind of executable code for processors, including code expressed in a machine language, an interpreted language or a scripting language. Executable code includes binary code, machine code, bytecode, code defining an integrated circuit (such as a hardware description language or netlist), and code expressed in a programming language code such as C, Java or OpenCL. Executable code may be, for example, any kind of software, firmware, script, module or library which, when suitably executed, processed, interpreted, compiled, executed at a virtual machine or other software environment, cause a processor of the computer system at which the executable code is supported to perform the tasks specified by the code.

A processor, computer, or computer system may be any kind of device, machine or dedicated circuit, or collection or portion thereof, with processing capability such that it can execute instructions. A processor may be or comprise any kind of general purpose or dedicated processor, such as a CPU, GPU, NNA, System-on-chip, state machine, media processor, an application-specific integrated circuit (ASIC), a programmable logic array, a field-programmable gate array (FPGA), or the like. A computer or computer system may comprise one or more processors.

It is also intended to encompass software which defines a configuration of hardware as described herein, such as HDL (hardware description language) software, as is used for designing integrated circuits, or for configuring programmable chips, to carry out desired functions. That is, there may be provided a computer readable storage medium having encoded thereon computer readable program code in the form of an integrated circuit definition dataset that when processed (i.e. run) in an integrated circuit manufacturing system configures the system to manufacture a ray tracing unit or processing unit configured to perform any of the methods described herein, or to manufacture a ray tracing unit or processing unit comprising any apparatus described herein. An integrated circuit definition dataset may be, for example, an integrated circuit description.

Therefore, there may be provided a method of manufacturing, at an integrated circuit manufacturing system, a ray tracing unit or processing unit as described herein. Furthermore, there may be provided an integrated circuit definition dataset that, when processed in an integrated circuit manufacturing system, causes the method of manufacturing a ray tracing unit or processing unit to be performed.

An integrated circuit definition dataset may be in the form of computer code, for example as a netlist, code for configuring a programmable chip, as a hardware description language defining hardware suitable for manufacture in an integrated circuit at any level, including as register transfer level (RTL) code, as high-level circuit representations such as Verilog or VHDL, and as low-level circuit representations such as OASIS (RTM) and GDSII. Higher level representations which logically define hardware suitable for manufacture in an integrated circuit (such as RTL) may be processed at a computer system configured for generating a manufacturing definition of an integrated circuit in the context of a software environment comprising definitions of circuit elements and rules for combining those elements in order to generate the manufacturing definition of an integrated circuit so defined by the representation. As is typically the case with software executing at a computer system so as to define a machine, one or more intermediate user steps (e.g. providing commands, variables etc.) may be required in order for a computer system configured for generating a manufacturing definition of an integrated circuit to execute code defining an integrated circuit so as to generate the manufacturing definition of that integrated circuit.

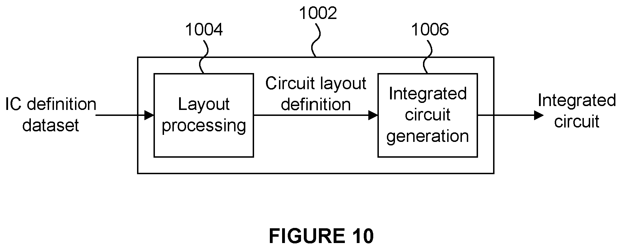

An example of processing an integrated circuit definition dataset at an integrated circuit manufacturing system so as to configure the system to manufacture a ray tracing unit or processing unit will now be described with respect to Figure 10.

Figure 10 shows an example of an integrated circuit (IC) manufacturing system 1002 which is configured to manufacture a ray tracing unit or processing unit as described in any of the examples herein. In particular, the IC manufacturing system 1002 comprises a layout processing system 1004 and an integrated circuit generation system 1006. The IC manufacturing system 1002 is configured to receive an IC definition dataset (e.g. defining a ray tracing unit or processing unit as described in any of the examples herein), process the IC definition dataset, and generate an IC according to the IC definition dataset (e.g. which embodies a ray tracing unit or processing unit as described in any of the examples herein). The processing of the IC definition dataset configures the IC manufacturing system 1002 to manufacture an integrated circuit embodying a ray tracing unit or processing unit as described in any of the examples herein.

The layout processing system 1004 is configured to receive and process the IC definition dataset to determine a circuit layout. Methods of determining a circuit layout from an IC definition dataset are known in the art, and for example may involve synthesising RTL code to determine a gate level representation of a circuit to be generated, e.g. in terms of logical components (e.g. NAND, NOR, AND, OR, MUX and FLIP-FLOP components). A circuit layout can be determined from the gate level representation of the circuit by determining positional information for the logical components. This may be done automatically or with user involvement in order to optimise the circuit layout. When the layout processing system 1004 has determined the circuit layout it may output a circuit layout definition to the IC generation system 1006. A circuit layout definition may be, for example, a circuit layout description.

The IC generation system 1006 generates an IC according to the circuit layout definition, as is known in the art. For example, the IC generation system 1006 may implement a semiconductor device fabrication process to generate the IC, which may involve a multiple-step sequence of photo lithographic and chemical processing steps during which electronic circuits are gradually created on a wafer made of semiconducting material. The circuit layout definition may be in the form of a mask which can be used in a lithographic process for generating an IC according to the circuit definition. Alternatively, the circuit layout definition provided to the IC generation system 1006 may be in the form of computer-readable code which the IC generation system 1006 can use to form a suitable mask for use in generating an IC.

The different processes performed by the IC manufacturing system 1002 may be implemented all in one location, e.g. by one party. Alternatively, the IC manufacturing system 1002 may be a distributed system such that some of the processes may be performed at different locations, and may be performed by different parties. For example, some of the stages of: (i) synthesising RTL code representing the IC definition dataset to form a gate level representation of a circuit to be generated, (ii) generating a circuit layout based on the gate level representation, (iii) forming a mask in accordance with the circuit layout, and (iv) fabricating an integrated circuit using the mask, may be performed in different locations and/or by different parties.

In other examples, processing of the integrated circuit definition dataset at an integrated circuit manufacturing system may configure the system to manufacture a ray tracing unit or processing unit without the IC definition dataset being processed so as to determine a circuit layout. For instance, an integrated circuit definition dataset may define the configuration of a reconfigurable processor, such as an FPGA, and the processing of that dataset may configure an IC manufacturing system to generate a reconfigurable processor having that defined configuration (e.g. by loading configuration data to the FPGA).

In some embodiments, an integrated circuit manufacturing definition dataset, when processed in an integrated circuit manufacturing system, may cause an integrated circuit manufacturing system to generate a device as described herein. For example, the configuration of an integrated circuit manufacturing system in the manner described above with respect to Figure 10 by an integrated circuit manufacturing definition dataset may cause a device as described herein to be manufactured.

In some examples, an integrated circuit definition dataset could include software which runs on hardware defined at the dataset or in combination with hardware defined at the dataset. In the example shown in Figure 10, the IC generation system may further be configured by an integrated circuit definition dataset to, on manufacturing an integrated circuit, load firmware onto that integrated circuit in accordance with program code defined at the integrated circuit definition dataset or otherwise provide program code with the integrated circuit for use with the integrated circuit.

The implementation of concepts set forth in this application in devices, apparatus, modules, and/or systems (as well as in methods implemented herein) may give rise to performance improvements when compared with known implementations. The performance improvements may include one or more of increased computational performance, reduced latency, increased throughput, and/or reduced power consumption. During manufacture of such devices, apparatus, modules, and systems (e.g. in integrated circuits) performance improvements can be traded-off against the physical implementation, thereby improving the method of manufacture. For example, a performance improvement may be traded against layout area, thereby matching the performance of a known implementation but using less silicon. This may be done, for example, by reusing functional blocks in a serialised fashion or sharing functional blocks between elements of the devices, apparatus, modules and/or systems. Conversely, concepts set forth in this application that give rise to improvements in the physical implementation of the devices, apparatus, modules, and systems (such as reduced silicon area) may be traded for improved performance. This may be done, for example, by manufacturing multiple instances of a module within a predefined area budget.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein. In view of the foregoing description it will be evident to a person skilled in the art that various modifications may be made within the scope of the invention.

## Claims

1. A computer-implemented method of parsing multidimensional data to identify work packets to be processed, wherein the multidimensional data is mapped into one-dimensional data using a Z-ordering function, wherein the multidimensional data represents a region of a scene, the method comprising:
obtaining dimensions of the multidimensional data;
obtaining information identifying a valid region of the multidimensional data, the valid region identifying work packets;
determining at least part of a sequence, within the one-dimensional data, corresponding to positions within the multidimensional data lying in the valid region, the determining comprising:
determining, in dependence on the Z-ordering function, whether a position defined by a first value of the one-dimensional data lies within the valid region;
in response to determining that the position defined by the first value does not lie within the valid region: calculating an overflow value which, when added to the first value, causes a least significant bit that is a 1 in a binary representation of the first value to flip to a 0;
summing the first value and the overflow value to obtain a trial value;
determining whether a position defined by the trial value lies within the valid region to thereby determine whether the trial value forms part of the sequence, wherein the sequence identifies work packets to be processed; and
outputting at least some of the work packets identified by the sequence for processing, wherein the outputted work packets are arranged to be processed for rendering at least part of the scene.

2. The method of claim 1, wherein the overflow value is equal to a power of 2.

3. The method of claim 2, wherein calculating the overflow value comprises:
identifying the least significant bit in a binary representation of the first value that is a 1; and
generating the overflow value to have a magnitude equal to the power of 2 value represented by the least significant bit that is a 1.

4. The method of any preceding claim, wherein the valid region is defined by a plurality of boundary values, one boundary value for each respective dimension of the multidimensional data, and wherein determining whether the position defined by the first value of the one-dimensional data lies within the valid region comprises:
converting the first value into a multidimensional coordinate using a mapping defined by the Z-ordering function; and
determining whether the multidimensional coordinate falls within a range defined by the plurality of boundary values.

5. The method of any preceding claim, further comprising determining, in dependence on the Z-ordering function, that a position defined by the trial value does not lie within the valid region to thereby determine that the trial value does not form part of the sequence, and in response to said determining:
identifying a least significant bit in a binary representation of the trial value that is a 1;
calculating a further overflow value whose magnitude is at least as great as a value represented by the least significant bit of the trial value that is a 1 and which, when added to the trial value, causes the least significant bit of the trial value that is a 1 to flip to a 0;
summing the trial value and the further overflow value to obtain a further trial value; and
determining whether a position defined by the further trial value lies within the valid region to thereby determine whether the further trial value forms part of the sequence.

6. The method of any preceding claim, wherein calculating the overflow value comprises performing, on the binary representation of the first value, a bit-inversion operation, an addition, and an at least one bitwise comparison operation, to thereby obtain the overflow value.

7. The method of any preceding claim, wherein the first value is the first entry in the one-dimensional data, and wherein the method comprises iterating, in sequential order, over entries of the one-dimensional data to thereby determine the at least part of the sequence corresponding to positions within the multidimensional data lying within the valid region.

8. The method of claim 7, wherein the at least part of a sequence is determined without testing a subset of values within the one-dimensional data to determine whether the subset of values define positions lying within the valid region, wherein the subset of values includes at least values located between, and not including, the first value and the trial value of the one-dimensional data.

9. The method of any preceding claim, wherein none of the values of the one-dimensional data located between, and not including, the first value and the trial value of the one-dimensional data represent positions that lie within the valid region.

10. The method of any preceding claim, wherein each dimension of the multidimensional data is equal to a power of two, and wherein at least one dimension of the valid region is not equal to a power of two.

11. The method of any preceding claim, wherein the Z-ordering function maps, for each mapped value of the one-dimensional data, alternate bits of a binary representation of the mapped value to a respective coordinate value of the multidimensional data.

12. The method of any preceding claim, wherein the computer-implemented method is part of a ray tracing system, and wherein the work packets identify ray tracing or shading operations.

13. The method of any preceding claim, wherein the multidimensional data represents a multidimensional array space for storing thread groups, and wherein the valid region represents an array of thread groups within the multidimensional array space, each thread group comprising identifying a plurality of work packets.

14. A processing unit for parsing multidimensional data to identify work packets to be processed, wherein the multidimensional data is mapped into one-dimensional data using a Z-ordering function, wherein the multidimensional data represents a region of a scene, the processing unit configured to:
obtain dimensions of the multidimensional data;
obtain information identifying a valid region of the multidimensional data, the valid region identifying work packets;
determine at least part of a sequence, within the one-dimensional data, corresponding to positions within the multidimensional data lying in the valid region, the processing unit configured to perform the determining by:
determining, in dependence on the Z-ordering function, whether a position defined by a first value of the one-dimensional data lies within the valid region;
in response to determining that the position defined by the first value does not lie within the valid region: calculating an overflow value which, when added to the first value, causes a least significant bit that is a 1 in a binary representation of the first value to flip to a 0;
summing the first value and the overflow value to obtain a trial value; and
determining whether a position defined by the trial value lies within the valid region to thereby determine whether the trial value forms part of the sequence, wherein the sequence identifies work packets to be processed; and
outputting at least some of the work packets identified by the sequence for processing, wherein the outputted work packets are arranged to be processed for rendering at least part of the scene.

15. Computer readable code configured to cause the method of any of claims 1 to 13 to be performed when the code is run.
